Europäisches Patentamt

European Patent Office

Office européen des brevets

(19)

(11) Publication number: **0 260 601 B1**

## (12) EUROPEAN PATENT SPECIFICATION

(45) Date of publication of patent specification: **24.07.91**     (51) Int. Cl.⁵: **G21C 3/32, G21C 3/34**

(21) Application number: **87113247.8**

(22) Date of filing: **10.09.87**

(54) **Fuel rod spacer with means for diverting liquid coolant flow.**

(30) Priority: **17.09.86 US 908140**

(43) Date of publication of application:
**23.03.88 Bulletin 88/12**

(45) Publication of the grant of the patent:
**24.07.91 Bulletin 91/30**

(84) Designated Contracting States:
**DE ES IT SE**

(56) References cited:
**EP-A- 0 146 896**
**FR-A- 2 542 492**
**GB-A- 1 105 289**

(73) Proprietor: **WESTINGHOUSE ELECTRIC COR-PORATION**
**Westinghouse Building Gateway Center**
**Pittsburgh Pennsylvania 15222(US)**

(72) Inventor: **Taleyarkhan, Rusi Pesi**
**21-G, Murray Court**
**Pittsburgh, Pa., 15 239(US)**

(74) Representative: **Patentanwälte Dipl.-Ing. R.**
**Holzer Dipl.-Ing. (FH) W. Gallo**
**Ludwigstrasse 26**
**W-8900 Augsburg(DE)**

## Description

The present invention relates generally to fuel assemblies for a nuclear reactor and, more particularly, to a fuel rod spacer with means for diverting liquid coolant flow, and which spacer is especially suitable for use with a fuel assembly for a boiling water reactor.

Nuclear fissioning occurring in a nuclear reactor during operation thereof results in the release of large amounts of energy dissipated in the reactor's fuel elements, or rods, in the form of heat which is removed from the fuel elements by passing a coolant over the surfaces thereof, and is extracted from the coolant to be utilized for performing useful work.

In a typical fuel assembly of a boiling water reactor (BWR), the fuel rods are divided into separate mini-bundles by a central water-cross, and the fuel rods of each mini-bundle are supported in parallel spaced relationship with respect to each other by means of several, e.g., six, spacer grids (usually referred to simply as spacers) which are spaced apart longitudinally along the associated mini-bundle of fuel rods. All of the fuel-rod mini-bundles in such fuel assembly are encircled by an outer tubular flow channel which has a generally rectangular cross-section and extends substantially throughout the whole length of the fuel assembly, interconnecting its top nozzle with its bottom nozzle, the latter fitting into the reactor core support plate and serving as an inlet for coolant flowing therethrough into the outer flow channel and along the fuel rods therein. A BWR fuel assembly of this type is illustrated and described in U.S. Patent No. 4,560,532, for example.

As well known in the art, the critical heat flux (CHF) performance of a BWR fuel assembly is of great importance to the safe operation of a boiling water reactor. Upon the occurrence of a CHF condition, the surface heat transfer coefficient drops steeply, thus leading to an exponential rise in fuel-rod cladding temperature which can cause cladding rupture and consequential release of fission fragments into the coolant. In order to avoid such a condition, regulatory guidelines mandate that a boiling water reactor be operated at low enough a power level to preclude a CHF condition.

With respect to BWR fuel assemblies like the one disclosed in the above-mentioned U.S. Patent, it has been found that CHF performance is highest for fuel rods in the corner and side, or perimeter, spacer locations of such fuel assembly, and is lowest for fuel rods in the interior locations. This is due primarily to the fact that the cooler liquid of the two-phase coolant accumulates in the perimeter fuel rod locations along the inner wall surface of the outer flow channel while the hot steam of the two-phase coolant tends to drift towards the interior fuel rod locations, there to cause premature dry-out and degradation of CHF performance. Document FR-A- 2 542 492 discloses fuel rod spacer grids which are provided with a series of transversely spaced fins mounted on said grid to deflect the upwardly flowing coolant.

It is the principal object of the invention to provide a fuel rod spacer designed to improve the CHF performance of a fuel assembly at the interior fuel rod locations thereof.

The invention accordingly resides in a nuclear fuel rod spacer comprising inner cell-defining means defining a plurality of fuel rod receiving inner cells, and an outer peripheral cell-defining means which, together with portions of the inner cell-defining means, defines a plurality of fuel rod receiving perimeter cells arrayed about the plurality of inner cells, said inner and perimeter cells being open cells extending through the spacer from an upstream side to a downstream side thereof, having regard to the flow direction of liquid coolant flowing therethrough when in use, characterized by a plurality of coolant-flow diverting scoops disposed on said outer peripheral cell-defining means in laterally spaced relationship with respect to one another and each having a supporting portion which extends from the outer peripheral cell-defining means upstream to a point spaced a first distance from the upstream side of the spacer, and a flow deflecting portion which extends from the distal end of said supporting portion in a direction inclined downstream and toward said plurality of inner cells, the flow deflecting portion of each scoop having a configuration enabling it to extend into a space between two fuel rods, when received in the perimeter cells nearest the respective scoop, and each flow deflecting portion terminating in an end which is located proximate to said plurality of inner cells and spaced upstream from the upstream side of the spacer a second distance shorter than said first distance.

When utilized as part of a BWR fuel assembly, the fuel rod spacer embodying the invention will, by virtue of its scoops, divert liquid coolant flow from the cooler walls of the outer flow channel of the fuel assembly and toward the interior fuel rod locations where it is needed in order that the fuel rods at those interior locations can exhibit enhanced CHF performance similar to that of the fuel rods at the corner and perimeter locations of the spacer. It is desirable for each of at least the three uppermost spacers of a BWR fuel assembly, i.e. of the three spacers nearest the downstream end of the latter, to incorporate the features according to the invention.

Preferably, the supporting portions of the scoops of the spacer defined above extend substantially parallel to the longitudinal axes of the inner and perimeter cells in extension, and the flow deflecting portion of each scoop is tapered and arcuate in the direction toward said end thereof.

In a spacer in which the inner cell-defining means are inner straps interleaved in an egg-crate like manner to define the inner cells, and the outer peripheral cell-defining means is an outer peripheral strap which extends circumferentially about the spacer and is attached to end portions of the respective inner straps, the supporting portions of the various scoops preferably are integral extensions of the outer peripheral strap, which extensions add height to the peripheral strap and thereby help to impart more structural rigidity to the spacer.

A preferred embodiment of the invention will now be described, by way of example only, with reference to the accompanying drawings, in which:

Figure 1 is an elevational view of a BWR fuel assembly, with parts broken away and sectioned for clarity;

Fig. 2 is an enlarged top plan view of the BWR fuel assembly, as seen along line 2-2 of Fig. 1;

Fig. 3 is an enlarged bottom plan view of the BWR fuel assembly, as seen along line 3-3 of Fig. 1;

Fig. 4 is a cross-sectional view of the BWR fuel assembly taken along line 4-4 of Fig. 1, which shows a spacer of one of the fuel-rod mini-bundles in full and as embodying the invention, and shows similar spacers of the remaining mini-bundles in outline;

Fig. 5 is a further cross-sectional view of the BWR fuel assembly similar to Fig. 4 but taken along line 5-5 of Fig. 1;

Fig. 6 is an enlarged top plan view of the upper right-hand spacer seen in Fig. 4, which shows the flow diverting scoops of the invention in greater detail;

Fig. 7 is a side elevational view of the fuel rod mini-bundle including the spacer having flow diverting scoops, as seen along line 7-7 of Fig. 6;

Fig. 8 is a cross-sectional view of the same fuel rod mini-bundle, as seen along line 8-8 of Fig. 7; and

Fig. 9 is an enlarged fragmentary view of the lower left-hand corner of the spacer shown in Fig. 4.

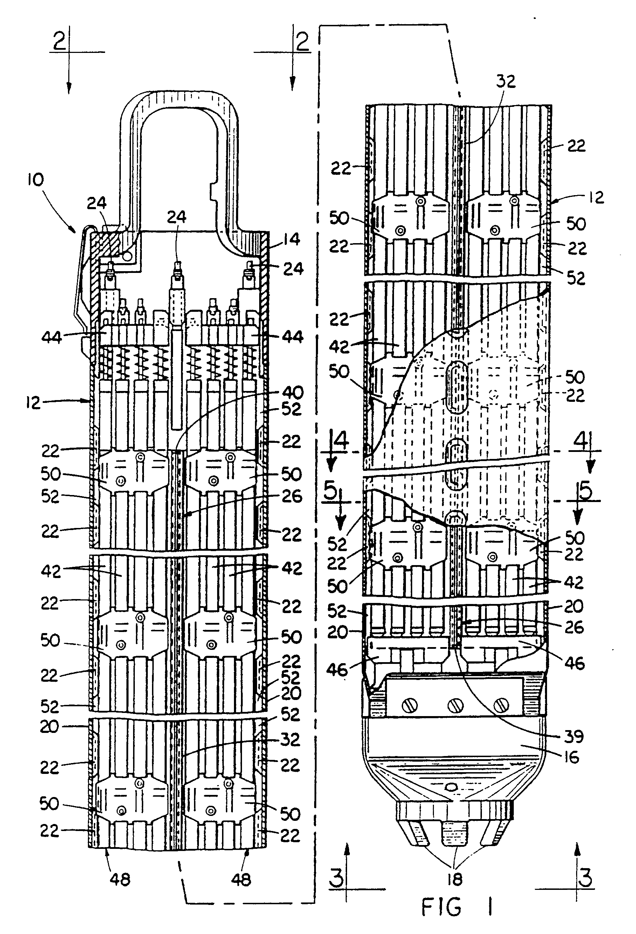

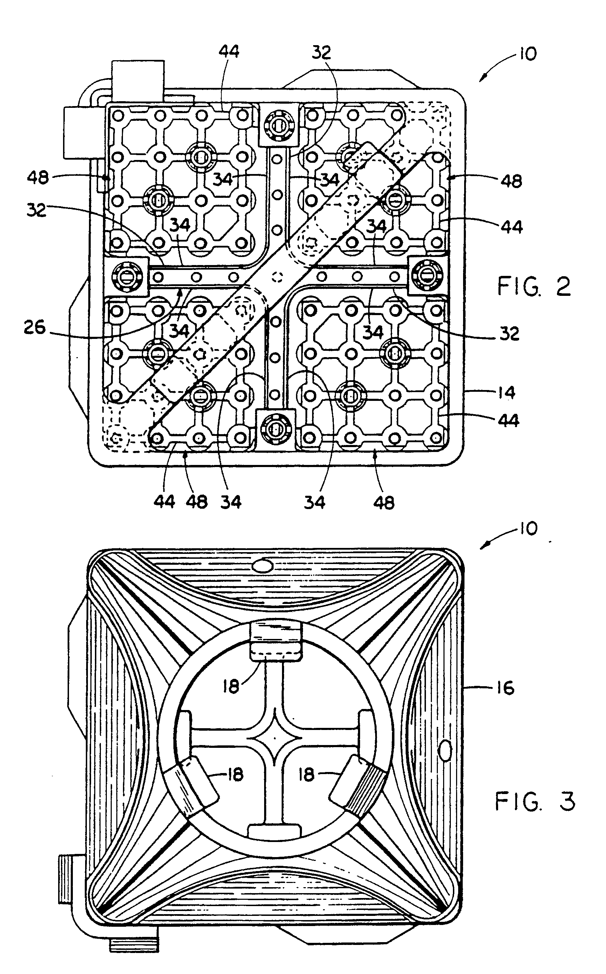

Referring now to the drawings, and particularly to Figs. 1 to 5 thereof, the nuclear fuel assembly illustrated therein and generally designated 10 is for use in a nuclear power reactor of the boiling water type. The fuel assembly 10 includes an elongate, tubular outer flow channel 12 which extends substantially for the full length of the fuel assembly 10 and interconnects an upper support fixture or top nozzle 14 with a lower base or bottom nozzle 16. The bottom nozzle 16 which serves as an inlet for coolant flow into the outer flow channel 12 has legs 18 for guiding it into a reactor core support plate (not shown) or into fuel storage racks located, for example, in a spent-fuel pool.

The outer flow channel 12, preferably formed of a zirconium alloy known as Zircaloy and having a generally rectangular cross-section, consists of four interconnected walls 20 extending substantially at right angles with respect to each other and each having on the inner surface thereof a plurality of structural ribs 22 spaced apart in a vertical row which is located about midway between the lateral end of the respective wall 20. Above the rows of structural ribs 22, the walls 20 have affixed thereto upwardly extending attachment studs 24 which are used to connect the top nozzle 14 to the outer flow channel 12.

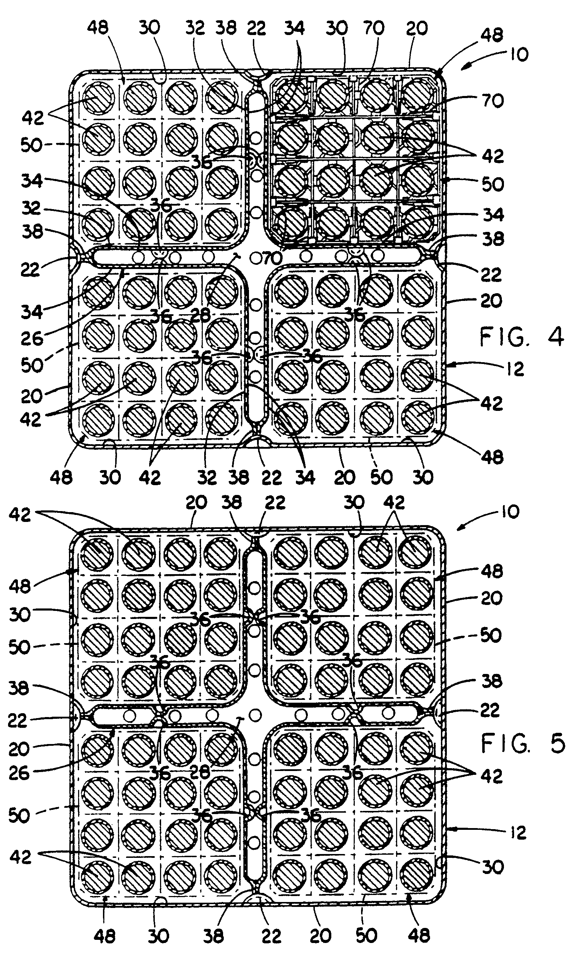

As seen from Figs. 1, 4 and 5, the fuel assembly 10 includes further a hollow water cross generally designated 26. This water cross 26 extends axially through the outer flow channel 12, dividing the latter into four separate compartments 30 and defining an inner coolant/moderator flow channel 28 of generally cruciform cross-section. The water cross 26 is formed of four elongate, generally L-shaped metal angles or sheet members 34 arranged and joined, e.g., welded, together along their outer ends so as to form four hollow, radial panels 32, the walls of which are maintained in the desired parallel spaced relationship with respect to each other by dimples 36 formed on the panel-defining leg portions of the sheet members 34 and joined, e.g., welded, together at their apices (see Fig. 4).

The hollow water cross 26 is attached to the walls 20 of the outer flow channel 12, preferably by having the outer ends 38 of its panels 32 joined, e.g. welded, to the structural ribs 22 of the outer channel walls 20, and it has an inlet 39 (Fig. 1) at its lower end and an outlet 40 at its upper end, both the inlet 39 and the outlet 40 communicating with the flow channel 28 within the water cross.

As seen best from Figs. 4 and 5, disposed within the outer flow channel 12 is a bundle of fuel rods 42 (sixty-four, in the illustrated embodiment) arranged in an N x N array, which bundle of fuel rods is divided into four equal mini-bundles by the water cross 26. The fuel rods 42 of each mini-bundle are connected at their opposite ends to upper and lower tie plates 44, 46 (Fig. 1) and are supported in parallel spaced relationship with respect to each other by means of grids or spacers 50 spaced axially along the fuel rod mini-bundle. Each mini-bundle of fuel rods 42, together with the tie plates 44, 46 and the support and spacer grids 50 associated therewith, form a fuel-rod subassembly 48 (Figs. 4 and 5) located in the respective compartment 30 within the outer flow channel 12. The lower and upper tie plates 44, 46 of each fuel-rod subassembly 48 have flow openings defined therethrough to permit coolant/moderator fluid to enter and exit the subassembly. The various compartments 30 in the fuel assembly are in fluid flow communication with each other through the gaps 52 (Fig. 1) between the structural ribs 22 so that there is pressure equalization between the compartments and, consequently, minimal risk of thermal hydrodynamic instability among the various fuel rod subassemblies.

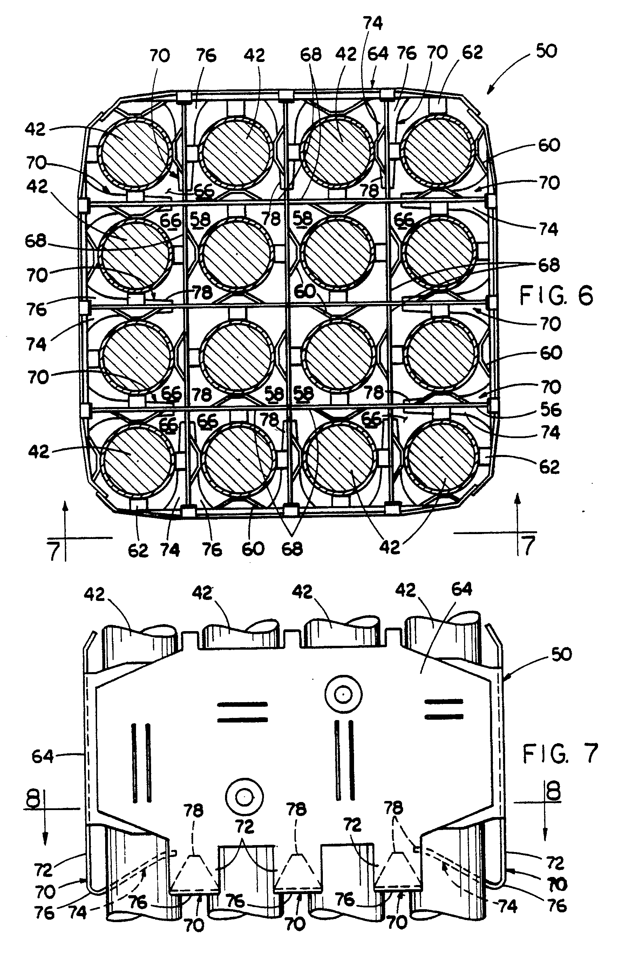

As seen from Fig. 4, and as shown in greater detail in Figs. 6-8, each grid or spacer 50 is composed of a plurality of inner straps 54 which are interleaved with each other in an egg-crate like configuration so as to define a plurality of inner cells 58, and an outer peripheral strap 64 which has end portions 56 of the inner straps 54 attached thereto and, together with the latter, defines perimeter cells 66 arrayed ring-like around the inner cells 58 as a group, the ring-like array of perimeter cells 66 being separated from the group of inner cells 58 by inner strap portions defining a border which surrounds the group of inner cells 58, as generally indicated at 68. Each of the inner and perimeter cells 58, 66 is open and adapted to have one of the fuel rods 42 extending therethrough, the inner and peripheral straps 54, 64 have formed thereon dimples 60 and springs 62 which project into the respective cells 58, 66 so as to engage the fuel rods 42 therein and to hold them in the desired parallel spaced relationship with respect to each other, all as well known in the art.

### Improved Spacer for Avoiding CHF Performance Degradation

The invention provides improved features at least in the CHF-limited ones of the spacers 50 of the fuel assembly 10, i.e., typically the three uppermost spacers or, in other words, the three spacers nearest the downstream end of the fuel assembly. Referring to Figs. 4 and 6-9, these features comprise a plurality of coolant flow diverting scoops 70 disposed on the outer peripheral strap 64 of each such spacer 50. Basically, each of the scoops 70 consists of a supporting portion 72 and a coolant-flow deflecting portion 74 connected at its outer end 76 to the lower or distal end of the supporting portion.

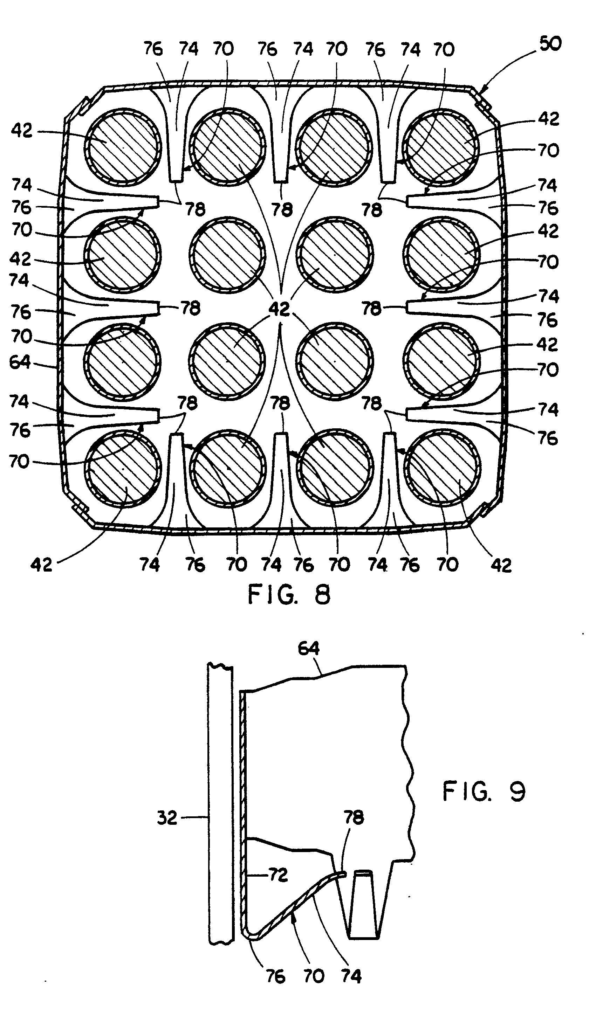

The supporting portions 72 of the scoops 70 are in the form of flat extensions of the outer strap 64 which are laterally spaced from one another along the upstream side of the spacer 50, and which extend from the strap 64 downward, i.e., upstream, and generally parallel with respect to the fuel rods 42 for, say, about 7 cm to 15 cm. The flow deflecting portions 74 of the scoops, which have a longitudinally tapered and arcuate configuration, extend into the respective spaces between the fuel rods 42 in the perimeter cell openings 66 of the spacer 50, the flow deflecting portion 74 of each scoop 70 extending from the distal end of the associated supporting portion 72 upwards (downstream) to a level below (upstream of) the upstream side of the spacer 50 and, more particularly, below the terminal end portions 56 of the inner straps 54, the inner or terminal end 78 of the flow deflecting portion 74 being located proximate to and at a level below the border 68 defined, as seen from Fig. 6, by portions of inner straps 54. Thus, and as depicted in Figs. 7 and 9, the flow deflecting portions 74 of the scoops 70 have their outer ends 76 spaced from the upstream side of the spacer 50 farther upstream than their inner ends 78 so that the deflecting portions 74, extending into and across the path of the coolant portion flowing toward the respective perimeter cell openings 66, are inclined relative to the coolant flow direction in a manner such as to scoop coolant from along the outer flow channel 12 and the water-cross panels 32, and to redistribute it, just upstream of the spacer 50, to the fuel rods 42 extending through the inner cell openings 58 thereof, thereby to enhance the CHF performance at the interior fuel-rod locations. Preferably, at least the three uppermost ones of the spacers 50 of the fuel assembly 10 shown in Fig. are provided with scoops 70 such as described above.

### Claims

1.  A nuclear fuel rod spacer (50) comprising inner cell-defining means (54) defining a plurality of fuel rod receiving inner cells (58), and an outer peripheral cell-defining means (64) which, together with portions (56, 68) of the inner cell-defining means, defines a plurality of fuel rod receiving perimeter cells (66) arrayed about the plurality of inner cells, said inner and perimeter cells being open cells extending through the spacer (50) from an upstream side to a downstream side thereof, having regard to the flow direction of liquid coolant flowing therethrough when in use, characterized by a plurality of coolant-flow diverting scoops (70) disposed on said outer peripheral cell-defining means (64) in laterally spaced relationship with respect to one another, each of said coolant flow diverting scoops (70) having a supporting portion (72) which extends from the outer peripheral cell-defining means (64) upstream to a point spaced a first distance from the upstream side of the spacer (50), and a flow deflecting portion (74) which extends from the distal end (76) of said supporting portion (72) in a direction inclined downstream and toward said plurality of inner cells (58), the flow deflecting portion (74) of each scoop (70) having a configuration enabling it to extend into a space between two fuel rods (42) when received in the perimeter cells (66) nearest the respective scoop, and each flow deflecting portion (74) terminating in an end (78) which is located proximate to said plurality of inner cells (58) and spaced upstream from the upstream side of the spacer (50) a second distance shorter than said first distance.

2. A nuclear fuel rod spacer according to claim 1, characterized in that the supporting portions (72) of the respective scoops (70) extend substantially parallel to the longitudinal axes of the inner and perimeter cells in extension.

3. A nuclear fuel rod spacer according to claim 1 or 2, characterized in that the flow deflecting portion (74) of each scoop (70) is tapered toward said end (78) thereof.

4. A nuclear fuel rod spacer according to claim 1, 2 or 3, characterized in that the flow deflecting portion (74) of each scoop (70) is arcuate toward said end (78) thereof.

5. A nuclear fuel rod spacer according to claim 1, 2, 3 or 4, characterized in that said inner cell-defining means (54) are inner straps interleaved in an egg-crate like manner to define said inner cells (58), and said outer peripheral cell-defining means (64) is an outer peripheral strap which extends circumferentially about the spacer (50) and is attached to end portions (56) of the respective inner straps, the supporting portion (72) of each scoop (70) being an integral extension of said outer peripheral strap (64).

6. A nuclear fuel assembly (10) including a tubular outer flow channel (12), a hollow water cross (26) disposed in said outer flow channel and dividing same into separate compartments (30), and a fuel-rod mini-bundle subassembly (48) disposed in each of said compartments and including a plurality of fuel rod spacers (50) spaced from each other longitudinally along the subassembly, characterized in that each of at least three spacers (50) nearest the downstream end of each subassembly (48) is a fuel rod spacer (50) according to any one of the preceding claims.

## Revendications

1. Dispositif d'espacement (50) de barres de combustible nucléaire comportant des moyens (54) définissant des cellules intérieures, définissant une pluralité de cellules (58) intérieures recevant des barres de combustible, et des moyens (64) définissant des cellules périphériques extérieures, qui, avec des parties (56, 68) des moyens définissant des cellules intérieures, définissent une pluralité de cellules (66) périmétriques recevant des barres de combustibles, disposées autour de la pluralité de cellules intérieures, lesdites cellules intérieures et périmétriques étant des cellules ouvertes s'étendant à travers le dispositif de d'espacement (50) d'un côté amont à un côté aval de celui-ci, par rapport à la direction d'écoulement du caloporteur liquide s'écoulant à travers celui-ci lorsqu'il est utilisé, **caractérisé** par une pluralité d'ergots (70) de dérivation du flux de caloporteur, disposés sur lesdits moyens (64) définissant des cellules périphériques extérieures en relation d'espacement latéral les uns par rapport aux autres, chacun desdits ergots (70) de dérivation du flux de caloporteur ayant une partie de support (72) qui s'étend à partir des moyens (64) de définition des cellules périphériques extérieures en amont vers un point espacé d'une première distance du côté amont du dispositif d'espacement (50), et une partie (74) de déviation du flux qui s'étend à partir de l'extrémité distale (76) de ladite partie de support (72) dans une direction inclinée vers l'aval et vers ladite pluralité de cellules intérieures (58), la partie, (74) de déviation de flux de chaque ergot (70) ayant une configuration lui permettant de s'étendre à l'intérieur d'un espace entre deux barres de combustible (42) lorsqu'elles sont reçues dans les cellules périmétriques (66) les plus voisines de l'ergot respectif, et chaque partie (74) de déviation de flux se terminant par une extrémité (78) qui est située à proximité de ladite pluralité de cellules intérieures (58) et espacée en amont du côté amont du dispositif d'espacement (50) d'une deuxième distance qui est plus courte que ladite première distance.

2. Dispositif d'espacement de barres de combustible nucléaire selon la revendication 1, **caractérisé** en ce que les parties de support (72) des ergots respectifs (70) s'étendent substantiellement parallèlement aux axes longitudinaux des cellules intérieures et périmétriques en extension.

3. Dispositif d'espacement de barres de combustible nucléaire selon la revendication 1 ou 2, **caractérisé** en ce que la partie de déviation de flux (74) de chaque ergot (70) est effilée en direction de ladite extrémité (78) de celle-ci.

4. Dispositif d'espacement de barres de combustible nucléaire selon la revendication 1, 2 ou 3, **caractérisé** en ce que la partie de déviation de flux (74) de chaque ergot (70) a une forme d'arc en direction de ladite extrémité (78) de celle-ci.

5. Dispositif d'espacement de barres de combustible nucléaire selon la revendication 1, 2, 3 ou 4, **caractérisé** en ce que lesdits moyens (54) de définition de cellules intérieures sont des bornes intérieures entrecroisées selon une configuration à claire-voie afin de définir lesdites cellules intérieures (58), et en ce que lesdits moyens (64) de définition de cellules extérieures périphériques sont une bande périphérique extérieure qui s'étend de façon circonférencielle autour du dispositif d'espacement (50) et qui sont fixées aux parties d'extrémités (56) des bandes intérieures respectives, la partie de support (72) de chaque ergot (70) étant une extension d'une seule pièce de ladite bande périphérique extérieure (64).

6. Assemblage combustible nucléaire (10) comprenant un canal (12) d'écoulement extérieur tubulaire, une croix d'eau creuse (26) disposée dans ledit canal d'écoulement extérieur et divisant celui-ci en compartiments séparés (30), et un sous-ensemble (48) de mini-faisceaux de barres de combustible disposé dans chacun desdits compartiments et comprenant une pluralité de dispositifs d'espacement (50) de barres de combustible espacées l'une de l'autre longitudinalement le long du sous-ensemble, **caractérisé** en ce que chacun d'au moins trois dispositifs d'espacement (50) les plus proches de l'extrémité aval de chaque sous-ensemble (48) est un dispositif d'espacement (50) de barres de combustible selon l'une quelconque des revendications précédentes.

**Patentansprüche**

1. Kernbrennstababstandshalter (50) mit innere Zellen bildenden Mitteln (54), welche eine Anzahl von Brennstäbe aufnehmenden inneren Zellen (58) bilden, und mit äußeren umfängliche Zellen bildenden Mitteln (64), welche gemeinsam mit Bereichen (56, 68) der die inneren Zellen bildenden Mitteln eine Mehrzahl von Brennstäbe aufnehmenden umfänglichen Zellen (66) bilden, welche regelmäßig um die Anzahl der inneren Zellen herum angeordnet sind, wobei die inneren und die umfänglichen Zellen offene Zellen sind, welche durch den Abstandshalter (50) von einer stromaufwärtigen Seite zu einer stromabwärtigen Seite desselben verlaufen, und zwar mit Bezug auf die Fließrichtung der im Betrieb durch ihn hindurchfließenden Kühlflüssigkeit, gekennzeichnet durch eine Mehrzahl von Kühlflüssigkeits-Ablenkfahnen (70), welche an den die äußeren umfänglichen Zellen bildenden Mitteln (64) mit seitlichen Abständen zueinander angeordnet sind, wobei jede der Kühlflüssigkeits-Ablenkfahnen (70) einen Tragteil (72) aufweist, welcher von den die äußeren umfänglichen Zellen bildenden Mitteln (64) stromaufwärts zu einem Punkt verläuft, welcher um einen ersten Abstand vom stromaufseitigen Ende des Abstandshalters (50) entfernt liegt, und einen Strömungsablenkungsbereich (74) aufweist, welcher vom distalen Ende (76) des Tragteils (72) in eine schräg stromabwärts weisende Richtung zu der Anzahl der inneren Zellen (58) hin verläuft, wobei der Strömungsablenkungsbereich (74) jeder Ablenkfahne (70) eine derartige Konfiguration hat, daß er in einen Zwischenraum zwischen zwei in am nächsten zur entsprechenden Ablenkfahne gelegenen umfänglichen Zellen (66) aufgenommenen Brennstäbe (42) hineinreicht, und wobei jeder Strömungsablenkungsbereich (74) in einem Ende (78) ausläuft, welches proximal. zur Anzahl der inneren Zellen (58) und stromaufwärts von der oberstromigen Seite des Abstandshalters (50) um einen zweiten Abstand entfernt angeordnet ist, welcher zweite Abstand kürzer als der erste ist.

2. Kernbrennstababstandshalter nach Anspruch 1, dadurch gekennzeichnet, daß die Tragteile (72) der entsprechenden Ablenkfahnen (70) etwa parallel zu den verlängerten Längsachsen der inneren und umfänglichen Zellen verlaufen.

3. Kernbrennstababstandshalter nach Anspruch 1 oder 2, dadurch gekennzeichnet, daß der Strömungablenkungsbereich (74) jeder Ablenkfahne (70) zu seinem Ende (78) hin verjüngt ist.

4. Kernbrennstababstandshalter nach Anspruch 1, 2 oder 3, dadurch gekennzeichnet, daß der Strömungablenkungsbereich (74) jeder Ablenkfahne (70) zu seinem Ende (78) hin gekrümmt ist.

5. Kernbrennstababstandshalter nach Anspruch I, 2, 3 oder 4, dadurch gekennzeichnet, daß die die inneren Zellen bildenden Mittel (54) innere, zur Bildung der inneren Zellen (58) eierkistenartig ineinandergesteckte Streifen sind, und daß das die äußeren umfänglichen Zellen bildende Mittel (64) ein äußerer umfänglicher Streifen ist, welcher umfänglich um den Abstandshalter (54) herum verläuft und an den Endbereichen (56) der entsprechenden inneren Streifen befestigt ist, wobei der Tragteil (72) jeder Ablenkfahne (70) eine einstückige Verlängerung des äußeren umfänglichen Streifens (64) ist.

6.  Kernbrennelement (10) mit einem rohrförmigen äußeren Fließkanal (12), einem im äußeren Fließkanal angeordneten und denselben in separate Kammern (30) teilenden, hohlen Wasserkreuz (26) und einem in jeder dieser Kammern angeordneten Brennstab-Minibündel/Unterlelement (48), welches eine Mehrzahl von entlang des Unterelements mit Längsabstand voneinander angeordneten Brennstababstandshaltern (15) aufweist, dadurch gekennzeichnet, daß jeder der mindestens drei Abstandshalter (50), welche dem unterstromigen Ende jedes Unterelements (48) am nächsten liegen, ein Brennelementabstandshalter (50) nach irgendeinem der vorstehenden Ansprüche ist.

FIG 1

FIG. 2

FIG. 3

FIG. 4

FIG. 5

FIG. 6

FIG. 7

FIG. 8

FIG. 9